# EUROPEAN PATENT APPLICATION

(11) **EP 1 946 879 A1**
(43) Date of publication of application: **23.07.2008**
(21) Application number: 07001092.1
(22) Date of filing: 19.01.2007
(51) Int. Cl.: B23K 26/32, B23K 35/38

(54) **Protective gas for laser welding and method for laser welding**

(71) Applicant: Air Liquide Deutschland GmbH, 40235 Düsseldorf (DE)
(72) Inventor: Kaya, Cerkez, 47804 Krefeld (DE)
(74) Representative: Kahlhöfer, Hermann

(57) **Abstract**

Subject matter of the present invention is a protective gas for laser welding comprising the following components:
- 45 to 65 % argon (Ar);
- 0 to 10 % carbon dioxide (CO₂) and
- 10 to 15 % oxygen (O₂),
the remainder being nitrogen (N₂), and a method for laser welding using such a protective gas.

The protective gas and the method for laser welding work pieces made of steel according to the invention allow the welding of e.g. tool steel components or cold work steel components in which the welded region has an improved hardness and strength compared to respective materials welded by methods known from prior art. In an advantageous way, it is possible, using the method for laser welding according to the invention, to use laser welding to repair, e.g., tools for which a heat treatment after welding is not possible or only possible taking into account severe drawbacks.

## Description

Subject matter of the present invention is a protective gas for laser welding and a method for laser welding work pieces made of steel. In particular, the protective gas and the method according to the invention are useful for work pieces made of tool steel or cold work steel.

If work pieces, such as e.g. dies or cavities or in general work pieces which are readily produced need welding, e. g. to repair cracks which extend from the surface of the work piece into its body, the hardness of the work piece is reduced within the welding zone according to processes known, in particular if the work piece is made of cold work steel or tool steel. Furthermore, work pieces or tools which need repair usually cannot be subjected to a heat treatment after welding to increase the hardness because often the tool or work piece comprises parts which cannot be heated without damage.

Based on this it is an object of the present invention to at least in part solve the problems of prior art and in particular to provide a method for laser welding work pieces wherein within the welding zone a loss of hardness and/or strength is at least reduced and to provide a respective protective gas which allows such a welding process.

These objects are accomplished by a protective gas and a method for laser welding having the features of the independent claims. The respective dependent claims are directed to improvements of the method or the protective gas.

The protective gas according to the present invention is used for laser welding and comprises at least the following components:
- 45 to 65 % argon (Ar);
- 0 to 10 % carbon dioxide (CO₂) and
- 10 to 15 % oxygen (O₂),
the remainder being nitrogen (N₂).

The portions or fractions given within this document in percent are - unless otherwise disclosed - volume percent at a pressure of 1 bar and a temperature of 20°C. It is to be understood that the protective gas according to the present invention can contain impurities the fractions of which are in total less than 0.1 %, preferably less than 0.01 %. It is furthermore to be understood that the fractions of the protective gas given in this document are meant such that they add up to 100% except of the impurities mentioned above.

The protective gas according to the present invention is particularly useful for the welding of steel materials and/or components comprising nickel and chromium. The use of the protective gas according to the invention improves advantageously the fractions of nitrogen and carbon of the steel being welded which improves the formation of nitrides and carbides within the welding zone. This leads to an improved hardness and strength of the material within the welding zone. Consequently, the protective gas according to the present invention improves the material properties within the welding zone without having to subject the whole work piece e.g. to a heat treatment compared to a welding process without the protective gas according to the present invention. The use of the protective gas according to the present invention allows the welding and in particular the laser welding of work pieces and in particular tools which are basically readily manufactured, in particular already hardened, surface finished and/or coated, and have e.g. to be repaired. It is to be understood that the increase of hardness mentioned within this document is compared to the hardness in the welding zone after welding with a protective gas known from prior art.

According to an advantageous improvement, the protective gas has the following components:
- 49 to 56% argon (Ar);
- 29 to 31 % nitrogen (N₂);
- 4 to 6 % carbon dioxide (CO₂) and
- 10 to 15 % oxygen (O₂).

During tests performed by the applicant in particular a protective gas comprising the following components has proven to be in particularly advantageous when welding tool steel and/or cold work steel:
- 50 % argon (Ar);
- 30 % nitrogen (N₂);
- 5 % carbon dioxide (CO₂) and
- 15 % oxygen (O₂).

This protective gas was used when welding a tool made of 1.2379 (X 155 Cr V Mo 12) according to EN10027 and DIN EN 10025 having a thickness of 30 mm at the welding region with a laser beam having a focus of 1.0 mm² and an intensity of 3000 kW/cm². The laser source was a ALPHA-Laser ALM 150 sold by Alpha Laser Technik, Buchheim, Germany. The welded region of the tool had after welding a hardness of 62 HRC which is the result of an improved formation of nitrides and carbides in this region by use of the protective gas according to the present invention. HRC is a degree of hardness measured according to the Rockwell hardness test. By use of the protective gas according to the invention the welding process increased the hardness in the heat affected zone compared to a welding process performed using pure argon as protective gas significantly. Tests performed by the applicant revealed a hardness of 48 HRC using argon as protective gas and hardnesses of 57 HRC to 62 HRC using a protective gas according to the present invention.

According to another aspect of the present invention a method for laser welding at least one work piece made of steel is proposed wherein a laser is used as a source for welding energy, characterized in that a protective gas according to the present invention is used.

In particular the use of a protective gas having the following components has proven to be advantageous: 55 % argon (Ar); 30 % nitrogen (N₂), 5 % carbon dioxide (CO₂) and 10 % oxygen (O₂). In particular the method according to the invention can be used for laser welding work pieces made of tool steel and/or cold work steels.

It is to be understood that within the present invention a tool steel comprises in particular 0.6 to 1.55 wt. % (weight %) of carbon and low contents of sulphur, phosphorus and non-metallic inclusions. In particular a tool steel comprises a silicon and manganese content of less than or equal to 0.25 wt. %. Another option is a so called "tool steel" having a manganese content of less than or equal to 0.3 wt. % and a silicon content of less than or equal to 0.30 wt. %. A further class of non-alloyed tool steel has a manganese content of less than or equal to 0.4 wt. % and a silicon content of 0.8 wt. % or less. In particular a non-alloyed tool steel comprises at least one of the following steels: C80W1, C105W1, C80W2, C125W2, C45W3, C75W3 and C55WS according to the steel classification as is known from DIN EN10027.

A so called "cold work steel" comprises tool steels which can be used at room temperature or at a temperature of up to about 200°C for metal working. The use of the protective gas improves the formation of a welding plasma which increases the effectiveness of the welding process. The composition of the protective gas leads to an increase of the content of nitrogen and carbon and to an increase of the content of nitrides and carbides. This leads to an increase of hardness and strength within the welded regions.

The method according to the invention can in particular be used for the welding of tools. It is understood within this invention that a tool is in particular applicable for at least one of the following operations: a) plastic forming; b) hot bending; c) cold bending; d) cutting; and e) punching. A tool according to the invention is in particular at least one of the following: A) a die; B) a cavitiy; C) a stamp and D) a punch. In particular the method according to the invention can be used to repair a respective work piece or tool. This means that in particular a method to repair a work piece and/or a tool is advantageous.

When repairing existing tools, it is problematic to the extend that the tools cannot be hardened by a heat treatment, so that the method according to the invention has proven to be in particular advantageous, as no successive heat treatment is necessary to harden the welded region of the tool.

According to an improvement of the method according to the invention, the steel comprises at least one of the following materials:
a) a cold work steel and
b) a tool steel.

The use of a laser beam for welding cold work steel and/or tool steel in the presence of a protective gas according to the invention has proven to be advantageous. In particular, said cold work steel or tool steel comprise the elements and contents as described above.

According to yet another improvement of the method according to the invention the steel comprises at least one of the following components:
a) carbon (C);
b) chromium (Cr);
c) molybdenum (Mb); and
d) vanadium (V).

In particular a steel comprising 1.55 wt. % carbon, 12 wt. % chromium, 0.8 wt. % molybdenum and 0.9 % vanadium was found to be advantageous.

When used to weld materials comprising these components the formation of nitrides and carbides is increased. This at least prevents a loss of hardness and may even lead to an improved hardness and/or strength of the steel material within the welding region.

According to yet another improvement of the method according to the invention at least one laser beam having a wave length of 1060 nm (nanometer) is used.

The wave length mentioned above are advantageous as a plurality of possible laser sources is commercially available. E.g., laser light having the wave length mentioned above can be produced by ALPHA-Laser ALM 150 lasers As the majority of these systems is commercially available, the method according to the invention can be performed easily and without large costs.

According to a further improvement of the method according to the invention, at least one laser source having a power of 50 to 200 W (Watt) is used.

Laser sources having powers within the range mentioned above have been found to be advantageous as they allow welding depths of 0.2 to 1.0 mm (Millimeters) depending on the material welded. These powers have been found to be in particular advantageous for to perform surface welding.

According to a further improvement of the method according to the invention at least one laser beam having an intensity of 2500 to 3500 kW/cm² (kilowatts per square centimetre), preferably of essentially 3000 kW/cm² is used.

The use of laser beams having a high intensity has to be found to be advantageous as in combination with the protective gas according to the invention an excellent welding result can be achieved where the welded region displays no reduced hardness and in particular has an improved strength and hardness.

According to a further improvement of the method according to the invention at least one laser beam having a focus at least of 1.0 mm² (square millimetres) is used.

In combination with high power laser sources the maximum focus defined above allows the introduction of a large amount of energy into the welding zone of the material to be welded. This results in a very effective welding process in which the material can be welded in depths of up to 0.5 mm, depending on the material to be welded.

A feed rate of 10 to 80 mm/min during the welding process has been found to be advantageous, as well as a feed of protective gas of 5 to 12 l/min (litres per minute).

In an advantageous improvement of the method according to the invention the welding process is a surface welding process. This means that the at least one work piece is not welded through and that in particular only up to 50%, preferably up to 20% of the thickness of the work piece is subjected to the welding operation.

The method according to the invention is in particular advantageous for the surface welding process of tools. Surface cracks of e. g. up to 0.5 mm depth in maximum or the like can be repaired using the method according to the invention.

According to a further improvement of the method according to the invention the welding seam generated by the welding process extends into a depth of up to 0.5 mm (millimetres)

The protective gas and the method for laser welding work pieces made of steel according to the invention allow the welding of e.g. tool steel components or cold work steel components in which the welded region has an improved hardness and strength compared to respective materials welded by methods known from prior art. In an advantageous way, it is possible, using the method for laser welding according to the invention, to use laser welding to repair, e.g., tools for which a heat treatment after welding is not possible or only possible taking into account severe drawbacks.

## Claims

1. Protective gas for laser welding comprising the following components:
- 45 to 65 % argon (Ar);
- 0 to 10 % carbon dioxide (CO₂) and
- 10 to 15 % oxygen (O₂),
the remainder being nitrogen (N₂).

2. Protective gas according to claim 1, having the following components:
- 49 % to 56 % argon (Ar);
- 29 % to 31 % nitrogen (N₂);
- 4 % to 6 % carbon dioxide (CO₂) and
- 10 % to 15 % oxygen (O₂).

3. Method for laser welding at least one work piece made of steel, wherein a laser is used as a source for the welding energy, **characterized in that** a protective gas according to one of the preceding claims is used.

4. Method according to claim 3, wherein the steel comprises at least one of the following materials:
a) a cold work steel and
b) a tool steel.

5. Method according to one of claims 3 to 4, wherein at least one laser beam having a wave length of 1060 nm (nanometer) is used.

6. Method according to one of claims 3 to 5, wherein at least one laser source having a power of 50 to 150 W (Watt) is used.

7. Method according to one of claims 3 to 6, wherein at least one laser beam having an intensity of 1000 to 10000kW/cm² (kilowatt per square centimetre) is used.

8. Method according to one of claims 3 to 7, wherein at least one laser beam having a focus of at most 2.0 mm² (square millimetre) is used.

9. Method according to one of claims 3 to 8, wherein the welding process is performed at a feed rate of 10 to 80 mm/min (millimetres per minute).

10. Method according to one of claims 3 to 9, wherein the protective gas is provided at a feed of 5 to 12 l/min (litres per minute).

11. Method according to one of claims 3 to 10, wherein the welding process is a surface welding process.

12. Method according to one of claims 3 to 11, wherein the welding seam generated by the welding process extends into a depth of up to 0.5 mm (millimeters).
